(19) Europäisches Patentamt
European Patent Office
Office européen des brevets

(11) Publication number: **0 413 310 A2**

# (12) EUROPEAN PATENT APPLICATION

(21) Application number: **90115588.7**

(51) Int. Cl.5: **C08L 51/04**, C08L 67/00

(22) Date of filing: **14.08.90**

(30) Priority: **15.08.89 JP 210490/89**

(43) Date of publication of application:
**20.02.91 Bulletin 91/08**

(84) Designated Contracting States:
**DE FR GB**

(71) Applicant: **MITSUBISHI RAYON CO., LTD**
**3-19, Kyobashi 2-chome Chuo-ku**
**Tokyo(JP)**

(72) Inventor: **Shigemitszu, Hideyuki, c/o Otake Plants**
**Mitsubishi Rayon Co. Ltd., 20-1 Miyuki-cho**
**Otake-shi, Hiroshima 739-06(JP)**
Inventor: **Hongo, Masafumi, c/o Mitsubishi Rayon Co. Ltd.**
**3-19, Kyobashi 2-chome**
**Chuo-ku, Tokyo(JP)**

(74) Representative: **TER MEER - MÜLLER - STEINMEISTER & PARTNER**
**Mauerkircherstrasse 45**
**D-8000 München 80(DE)**

## (54) Thermoplastic resin composition having improved impact resistance.

(57) Disclosed is a thermoplastic resin composition comprised of:
(A) 10 - 90 wt. parts of a graft copolymer obtained by graft-polymerizing, in the presence of (a) 15 - 85 wt. parts of a rubbery polymer selected from organosiloxane rubbers and crosslinked acrylic rubbers, (b) 85 - 15 wt. parts of (a) mixture of (i) 15 - 40 wt.% of a vinyl or vinylidene cyanide monomer, (ii) 25 -85 wt.% of an aromatic vinyl or vinylidene monomer and (iii) up to 35 wt.% of other ethylenically unsaturated monomer, in which the sum of components (a) and (b) is 100 wt. parts and the sum of components (i) through (iii) is 100 wt.%;
(B) 10 - 90 wt. parts of a polyester resin composed mainly of a polyalkylene, polycycloalkylene or polyaralkylene aromatic dicarboxylate;
(C) 0 - 70 wt. parts of a polymer of at least one monomer selected from vinyl or vinylidene cyanide monomers, aromatic vinyl or vinylidene monomers and methacrylic acid ester monomers; the sum of components (A), (B) and (C) being 100 wt. parts; and
(D) 2 - 20 wt. parts, per 100 wt. parts of components (A), (B) and (C), of a copolymer comprised of a polyolefin copolymerized with 5 - 30 wt.% of glycidyl methacrylate as the main chain and a copolymer comprised of vinyl or vinylidene cyanide monomer units and aromatic vinyl or vinylidene monomer units as the side chain.

EP 0 413 310 A2

# THERMOPLASTIC RESIN COMPOSITION HAVING IMPROVED IMPACT RESISTANCE

## BACKGROUND OF THE INVENTION

### 1. Field of the Invention

The present invention relates to a thermoplastic resin composition having an improved impact resistance.

### 2. Description of the Related Art

Thermoplastic polyesters, for example, polyalkylene terephthalates, have a good moldability, mechanical properties, weatherability and electrically insulating properties, and therefore, are widely used in various fields as electric and electronic parts, automobile parts and the like. Nevertheless, since the impact resistance, especially the notched impact strength, thereof is poor, the application range is greatly limited.

As the means for improving the impact resistance of a thermoplastic polyester, a method of blending an ABS resin in this polyester has been proposed in Japanese Unexamined Patent Publication No. 49-97081 and Japanese Unexamined Patent Publication No. 50-3450, and a composition formed by further incorporating an inorganic filler into the above-mentioned blend has been proposed in Japanese Unexamined Patent Publication No. 56-161455. In these compositions, the heat resistance and chemical resistance are improved, but the weather-ability, heat-resistant stability and impact resistance are still low, and thus, the application range is still limited.

A method of blending a crosslinked acrylic rubber into a thermoplastic polyester has been proposed in Japanese Patent Unexamined Patent Publication No. 52-150466, Japanese Unexamined Patent Publication No. 53-137251 and Japanese Unexamined Patent Publication No. 54-150457, and a method of blending a polyorganosiloxane rubber into a thermoplastic polyester has been proposed in Japanese Unexamined Patent Publication No. 62-121751. According to these methods, the weatherability and heat-resistance stability are improved compared to these properties then attained by the method of blending an ABS resin, but the attained impact resistance is still low.

## SUMMARY OF THE INVENTION

A primary object of the present invention is to provide a composition comprising as the main component a polyester resin reinforced with a polyorganosiloxane rubber and/or a crosslinked acrylic rubber, which has an improved resistance.

In accordance with the present invention, there is provided a thermoplastic resin composition which comprises:

(A) 10 to 90 parts by weight of a graft copolymer obtained by graft-polymerizing, in the presence of (a) 15 to 85 parts by weight of at least one rubbery polymer selected from the group consisting of organosiloxane rubbers and crosslinked acrylic rubbers, (b) 85 to 15 parts by weight of a monomer mixture comprising (i) 15 to 40% by weight of a vinyl or vinylidene cyanide monomer, (ii) 25 to 85% by weight of an aromatic vinyl or vinylidene monomer and (iii) 0 to 35% by weight of an ethylenically unsaturated monomer, in which the sum of the amounts of components (a) and (b) is 100 parts by weight and the sum of the amounts of components (i) through (iii) is 100% by weight;

(B) 10 to 90 parts by weight of a polyester resin composed mainly of a polyalkylene terephthalate;

(C) 0 to 70 parts by weight of a polymer obtained by polymerizing at least one monomer selected from the group consisting of vinyl or vinylidene cyanide monomers, aromatic vinyl or vinylidene monomers and methacrylic acid ester monomers; the sum of the amounts of components (A), (B) and (C) being 100 parts by weight; and

(D) 2 to 20 parts by weight per 100 parts by weight of the sum of components (A), (B) and (C), of a copolymer comprising a polyolefin copolymerized with glycidyl methacrylate as the main chain and a copolymer composed of vinyl or vinylidene cyanide monomer units and aromatic vinyl or vinylidene monomer units as the side chain, in which the content of glycidyl methacrylate in the glycidyl methacrylate-copolymerized polyolefin is 5 to 30% by weight based on the weight of the glycidyl

methacrylate-copolymerized polyolefin.

## DESCRIPTION OF THE PREFERRED EMBODIMENTS

The respective components of the composition of the present invention are first explained.

### (1) Graft Copolymer (A)

The graft copolymer (A) used in the present invention is obtained by graft-polymerizing a vinyl or vinylidene cyanide monomer, an aromatic vinyl or vinylidene monomer and an optional other ethylenically unsaturated monomer in the presence of a rubbery polymer.

As the rubbery polymer (a), there can be mentioned a rubbery polymer comprising at least 50% by weight of an organosiloxane or an acrylic acid ester in a substrate rubber polymer, such as an organosiloxane rubber or a crosslinked acrylic rubber. The content of the rubbery polymer in the graft copolymer (A) is 15 to 85% by weight based on the weight of the graft copolymer (A).

As the organosiloxane rubber, there can be mentioned a polyorganosiloxane rubber obtained by polymerizing an organosiloxane with a crosslinking agent, optionally with a grafting agent, and a composite rubber comprising a crosslinked acrylic acid ester rubber entangled with this polyorganosiloxane rubber or a composite rubber having a multi-layer structure comprised of a crosslinked acrylic acid ester rubber layer and the polyorganosiloxane rubber layer.

The polyorganosiloxane rubber is synthesized from an organosiloxane, a crosslinking agent, and an optional grafting agent.

A siloxane unit represented by the following formula (1):

$R^1_mSiO_{(4-m)/2}$ (1)

wherein $R^1$ represents a hydrogen atom, a methyl group, an ethyl group, a propyl group or a phenyl group, and m is 0, 1 or 2,

is preferred as the siloxane unit constituting the organosiloxane rubber.

Cyclic compounds having a ring comprising at least 3 members can be mentioned as the organosiloxane, and cyclic compounds having a ring comprising 3 to 6 members are preferably used. As specific examples, there can be mentioned hexamethylcyclotrisiloxane, octamethylcyclotetrasiloxane, decamethylcyclopentasiloxane, dodecamethylcyclohexasiloxane, trimethyltriphenylcyclotrisiloxane, tetramethyltetraphenylcyclotetrasiloxane and octaphenylcyclotetrasiloxane. These compounds can be used alone or in the form of a mixture of two or more thereof. The amount of the organosiloxane in the polyorganosiloxane rubber component is at least 50% by weight, preferably at least 70% by weight.

As the crosslinking agent, there can be used trifunctional and tetrafunctional silane crosslinking agents such as trimethoxymethylsilane, triethoxyphenylsilane, tetramethoxysilane, tetraethoxysilane, tetra-n-propoxysilane and tetrabutoxysilane. Tetrafunctional crosslinking agents are preferably used, and tetraethoxysilane is especially preferably used. The amount of the crosslinking agent is 0.1 to 30% by weight based on the polyorganosiloxane rubber component.

Compounds capable of forming units represented by the following formula:

$$CH_2=\underset{R^3}{\underset{|}{C}}-COO\!\left(CH_2\right)_p SiR^2_nO_{(3-n)/2} \quad (2\text{-}1),$$

$$CH_2=CH-SiR^2_nO_{(3-n)/2} \quad (2\text{-}2),$$

or

$$HS\!\left(CH_2\right)_p SiR^2_nO_{(3-n)/2} \quad (2\text{-}3)$$

wherein $R^2$ represents a methyl group, an ethyl group or a phenyl group, $R^3$ represents a hydrogen atom or a methyl group, n is 0, 1 or 2, and p is a number of from 1 to 6,

are used as the grafting agent. Especially an acryloyloxysiloxane or methacryloyloxysiloxane capable of forming units represented by the formula (2-1) has a high grafting efficiency and can form an effective graft

chain, and therefore, this grafting agent is advantageous in the manifestation of the impact resistance. A methacryloyloxysiloxane is especially preferably used as the compound capable of forming units represented by the formula (2-1). As specific examples of the methacryloyloxysiloxane, there can be mentioned β-methacryloyloxyethyldimethoxymethylsilane, γ-methacryloyloxypropylmethoxydimethylsilane, γ-methacryloyloxypropyldimethoxymethylsilane, γ-methacryloyloxypropyltrimethoxysilane, γ-methacryloyloxypropylethoxydiethylsilane, γ-methacryloyloxypropyldiethoxymethylsilane and δ-methacryloyloxybutyldiethoxymethylsilane. The amount of the grafting agent used is up to 10% by weight based on the polyorganosiloxane rubber component.

Processes disclosed in U.S. Patent No. 2,891,920 and U.S. Patent No. 3,294,725 can be adopted for the production of this polyorganosiloxane. When carrying out the present invention, there is preferably adopted a process comprising mixing a mixed solution of an organosiloxane, a cross-linking agent and an optional grafting agent under shear with water in the presence of a sulfonic acid type emulsifier such as an alkyl benzene-sulfonate or an alkyl sulfonate by using, for example, a homogenizer. The alkyl benzenesulfonate is especially preferably used because it acts not only as an emulsifier for the organosiloxane but also as a polymerization initiator. The combined use of this emulsifier with a metal salt of an alkyl benzene-sulfonate or a metal salt of an alkyl sulfonate is preferred because an effect stably of maintaining a polymer is attained at the graft polymerization.

The crosslinked acrylic acid ester rubber component constituting the composite rubber is synthesized from an acrylic acid ester or a monomer mixture comprising at least 50% by weight of an acrylic acid ester and not more than 50% by weight of a monoethylenically unsaturated monomer, as described below, a crosslinking agent and a grafting agent.

As the acrylic acid ester, there can be mentioned alkyl acrylates having 1 to 12 carbon atoms in the alkyl group, such as methyl acrylate, ethyl acrylate, n-propyl acrylate, n-butyl acrylate, 2-ethylhexyl acrylate and n-lauryl acrylate, haloalkyl acrylates having 1 to 12 carbon atoms in the haloalkyl group, such as chloroethyl acrylate and aromatic esters of acrylic acid, such as aralkyl acrylate having 7 to 10 carbon atoms in the aralkyl group, for example, benzyl acrylate and phenetyl acrylate. Use of n-butyl acrylate is especially preferred.

As the optional monoethylenically unsaturated monomer copolymerizable with the above-mentioned acrylic acid ester, there can be mentioned methacrylic acid esters such as methyl methacrylate and butyl methacrylate, acrylonitrile, and styrene. This comonomer can be used in an amount of up to 50% by weight based on the total weight of the monomer mixture.

For imparting a crosslinked structure to this acrylic ester type polymer, a monomer or monomer mixture composed mainly of an acrylic acid ester as mentioned above is polymerized by using at least one member selected from grafting agents and crosslinking agents.

By the grafting agent referred to herein is meant a compound having 2 or 3 addition-polymerizable unsaturated groups, which are greatly different from one another in the polymerization reactivity thereof. As specific examples, there can be mentioned allyl esters of unsaturated acids such as acrylic acid, methacrylic acid, maleic acid, fumaric acid, cyanuric acid and isocyanuric acid. By the crosslinking agent referred to herein is meant a compound having a plurality of addition-polymerizable unsaturated groups which are substantially equal or only slightly different in the polymerization reactivity thereof. As specific examples, there can be mentioned diacrylic acid esters and dimethacrylic acid esters of polyalkylene glycols, and divinylbenzene.

These grafting agents and crosslinking agents can be used alone or in the form of a mixture of two or more thereof. The grafting agent and crosslinking agent are preferably used in a total amount of 0.1 to 10% by weight based on the crosslinked acrylic acid ester rubber component. If the total amount is smaller than 0.1% by weight, the appearance of the molded article becomes poor. If the total amount is larger than 10% by weight, the impact strength is lowered.

The polymerization for formation of the crosslinked acrylic acid ester rubber component is accomplished by adding a monomer composed mainly of an acrylic acid ester as mentioned above, a crosslinking and a grafting agent to a latex of a polyorganosiloxane rubber component neutralized with an aqueous alkaline solution of sodium hydroxide, potassium hydroxide or sodium carbonate to swell the monomer in polyorganosiloxane rubber particles, and then reacting the monomer with a usual radical polymerization initiator. With an advance of the polymerization, crosslinked networks of the acrylic ester polymer rubber entangled with crosslinked networks of the polyorganosiloxane rubber are formed, and there can be obtained a composite rubber of the polyorganosiloxane rubber component and crosslinked acrylic acid ester rubber component which cannot be substantially separated from each other.

If the content of the polyorganosiloxane rubber component constituting the composite rubber exceeds 90% by weight, the surface appearance of a shaped article formed from the obtained resin composition

becomes poor, and if the content of the crosslinked acrylic acid ester rubber component exceeds 90% weight, the impact resistance of a shaped article formed from the obtained resin composition is low. Accordingly, the content of each of the two rubber components constituting the composite rubber is preferably in the range of from 10 to 90% by weight (the total amount of both the components is 100% by weight), more preferably in the range of from 20 to 80% by weight.

Preferably, the average particle diameter of the composite rubber is in the range of from 0.08 to 0.6 µm. If the average particle diameter is smaller than 0.08 µm, the impact resistance of a shaped article formed from the obtained resin composition is low, and if the average particle diameter exceeds 0.6 µm, the surface appearance of the molded article becomes poor.

As another example of the rubbery polymer, there can be mentioned crosslinked acrylic rubbers, which include (a) a crosslinked acrylic acid ester rubber and (b) an acrylic rubber having a multi-layer structure, which comprises a core portion of a diene rubber in the interior of particles, and an outer layer portion composed of a crosslinked acrylic acid rubber. The crosslinked acrylic acid ester rubber (a) and the crosslinked acrylic acid ester rubber constituting the outer layer portion of the multi-layer acrylic rubber (b) are formed from an acrylic acid ester or a monomer mixture comprised of at least 50% by weight of an acrylic acid ester and not more than 50% by weight of a copolymerizable monoethylenically unsaturated monomer, in combination with a grafting agent and a crosslinking agent.

Monomers similar to those used for the production of the above-mentioned composite rubber can be used as the acrylic acid ester constituting the crosslinked acrylic acid ester rubber. For example, there can be mentioned alkyl acrylates having 1 to 12 carbon atoms in the alkyl group, such as methyl acrylate, ethyl acrylate, n-propyl acrylate, n-butyl acrylate, 2-ethylhexyl acrylate and n-lauryl acrylate, haloalkyl acrylates having 1 to 12 carbon atoms in the haloalkyl group, such as chloroethylacrylate, and aromatic esters of acrylic acid, aralkyl acrylates having 7 to 10 carbon atoms in the aralkyl group, for example, such as benzyl acrylate and phenetyl acrylate.

As the optional monoethylenically unsaturated monomer copolymerizable with the acrylic acid ester, there can be mentioned methacrylic acid esters such as methyl methacrylate and butyl methacrylate, acrylonitrile, and styrene. The comonomer is used in an amount of up to 50% by weight based on the total weight of the monomer mixture for the crosslinked acrylic acid ester rubber.

The diene rubber constituting the core portion of the multi-layer acrylic rubber (b) is comprised of, for example, a polybutadiene rubber or a butadiene/styrene or acrylonitrile copolymer rubber.

Crosslinking agents and grafting agents similar to those used for the production of the composite rubber can be used for the preparation of the crosslinked acrylic acid ester rubber. For example, there can be mentioned crosslinking agents such as diacrylic acid esters and dimethacrylic acid esters of polyalkylene glycols, and divinylbenzene, and grafting agents such as allyl esters of unsaturated acids such as acrylic acid, methacrylic acid, maleic acid, fumaric acid, cyanuric acid and isocyanuric acid. The total amount of the crosslinking agent and grafting agent is in the range of from 0.1 to 10% by weight based on the crosslinked acrylic acid ester rubber. If the total amount is smaller than 0.1% by weight, the appearance of the shaped article is poor, and if the total amount is larger than 10% by weight, the impact resistance is reduced.

The multi-layer acrylic rubber comprising a diene rubber in the interior of particles and an outer layer portion composed of a crosslinked acrylic acid ester polymer can be obtained according to the process disclosed in Japanese Unexamined Patent Publication No. 63-81153. A preferred example of the multi-layer acrylic rubber, there can be mentioned an acrylic rubber having a structure which comprises 2 to 50% by weight of diene rubber particles agglomerated by an acid group-containing copolymer latex, in the interior of particles, and 50 to 98% by weight of a crosslinked acrylic ester rubber formed by using an acrylic acid ester as the main component in combination with a grafting agent and a crosslinking agent, in the outer layer portion of the particles.

The above-mentioned organosiloxane rubbers and crosslinked acrylic rubbers can be used alone or in the form of a mixture of two or more thereof.

As the vinyl or vinylidene cyanide monomer used for the graft polymerization, there can be mentioned acrylonitrile, methacrylonitrile, ethacrylonitrile and fumaronitrile. These monomers can be used alone or in the form of a mixture of two or more thereof. The amount of the vinyl cyanide monomer is 15 to 40% by weight based on the total weight of the monomer mixture to be grafted onto the rubbery polymer. If the proportion of the vinyl or vinylidene cyanide monomer is smaller than 15% by weight, the impact resistance of the obtained resin composition is poor. If the proportion of the vinyl or vinylidene cyanide monomer is larger than 40% by weight, discoloration is conspicuous when the obtained resin composition is molded, and the impact resistance is reduced.

As the aromatic vinyl or vinylidene monomer used for the graft polymerization, there can be mentioned

styrene, α-methylstyrene, o-methylstyrene, 1,3-dimethylstyrene, p-methylstyrene, t-butylstyrene, halogenated styrene and p-ethylstyrene. These monomers can be used alone or in the form of a mixture of two or more thereof. The amount of the aromatic vinyl monomer is 25 to 85% by weight based on the total weight of the monomer mixture to be grafted onto the rubbery polymer. If the proportion of the aromatic vinyl or vinylidene monomer is outside this range, at least one of the impact resistance and moldability is poor.

As the other copolymerizable ethylenically unsaturated monomer that can be optionally used for the graft polymerization, there can be mentioned methyl methacrylate, ethyl methacrylate, and maleimide monomers such as N-phenylmaleimide, although the monomers that can be used are not limited to these monomers. The copolymerizable ethylenically unsaturated monomer is used in an amount of up to 35% by weight based on the total weight of the monomer mixture to be grafted onto the rubbery polymer.

The amount of the graft copolymer (A) used is 10 to 90 parts by weight per 100 parts by weight of the total amount of components (A), (B) and (C). If the amount of the graft copolymer (A) is smaller than 10 parts by weight, the impact resistance of the obtained composition is poor, and if the amount of the graft copolymer (A) is larger than 90 parts by weight, the chemical resistance is poor.

Such graft copolymers (A) can be used alone or in the form of a mixture of two or more thereof. In view of the impact resistance, the particle diameter of the graft copolymer (A) is preferably in the range of from 0.2 to 0.5 µm.

(2) Polyester Resin (B)

The polyester resin (B) used in the present invention is composed of at least 50% by weight of a polyester derived from an aromatic dicarboxylic acid having 8 to 22 carbon atoms and a glycol having 2 to 22 carbon atoms which is selected from alkylene glycols, cycloalkylene glycols and aralkylene glycols, and if desired, a minor amount of an aliphatic dicarboxylic acid such as adipic acid or sebacic acid can be contained as structural units, and a minor amount of a polyalkylene glycol such as polyethylene glycol or polytetramethylene glycol can be contained as structural units. Polyethylene terephthalate and polytetramethylene terephthalate are preferably used as the polyester resin. These polyester resins can be used alone or in the form of a mixture of two or more thereof.

The amount of the polyester resin (B) used is 10 to 90 parts by weight per 100 parts by weight of the total amount of components (A), (B) and (C). If the amount of the polyester resin (B) is outside this range, at least one of the impact resistance and chemical resistance is poor and good results can not be obtained.

(3) Polymer (C)

Monomers similar to those used for the above-mentioned copolymer (A) can be used as the vinyl or vinylidene cyanide monomer and aromatic vinyl or vinylidene monomer for the polymer (C) in the present invention. The kind of the methacrylic acid ester monomer is not particularly critical, but an alkyl methacrylate having 1 to 12 carbon atoms, especially 1 to 4 carbon atoms in the alkyl group, such as methyl methacrylate, ethyl methacrylate, propyl methacrylate and butyl methacrylate are preferably used. Another copolymerizable monomer can be optionally polymerized to the polymer (C) in an amount of up to 30% by weight based on the polymer (C) in addition to the above-mentioned monomers. As the copolymerizable monomer, there can be mentioned acrylic acid ester monomers and maleimide monomers, although monomers usable are not limited to these monomers. The polymer (C) is used according to need for improving the shapability, heat resistance and elastic modulus. The amount of the polymer (C) used is 0 to 70 parts by weight per 100 parts by weight of the total amount of components (A), (B) and (C). If the amount of the polymer (C) is outside this range, the intended resin composition of the present invention cannot be obtained. The intrinsic viscosity of the polymer (C) is preferably 0.3 to 1.5 in view of the shapability and impact resistance.

(4) Copolymer (D)

One of the characteristic features of the present invention is that the copolymer (D) is incorporated in the thermoplastic resin composition. This copolymer (D) is a copolymer comprising, as the main chain, a polyolefin copolymerized with glycidyl methacrylate and, as the side chain, a copolymer composed of a vinyl or vinylidene cyanide monomer and an aromatic vinyl or vinylidene monomer, in which the content of

glycidyl methacrylate in the polyolefin copolymerized with glycidyl methacrylate is 5 to 30% by weight.

In the copolymer (D), as the olefin used for the copolymer as the main chain, there can be mentioned α-olefins having 2 to 4 carbon atoms such as ethylene, propylene and butene-1, and an olefin copolymer comprising at least 50 mole% of ethylene is preferably used.

Vinyl or vinylidene cyanide monomers and aromatic vinyl or vinylidene monomers similar to those mentioned above for the production of the graft copolymer (A) can be used for the copolymer as the side chain in the copolymer (D). If desired, another copolymerizable monomer can be polymerized in an amount of up to 30% by weight to the polymer as the side chain in addition to the above-mentioned monomers. As the copolymerizable monomer, there can be mentioned methacrylic acid ester monomers, acrylic acid ester monomers and maleimide monomers, although monomers usable are not limited to these monomers. In view of the impact resistance and shapability, the vinyl or vinylidene cyanide monomer/aromatic vinyl or vinylidene monomer weight ratio is preferably in the range of from 10/90 to 40/60.

The content of glycidyl methacrylate in the polyolefin copolymerized with glycidyl methacrylate is 5 to 30% by weight. If the content of glycidyl methacrylate is less than 5% by weight, the effect of improving the impact resistance is insufficient, and if the content of glycidyl methacrylate is more than 30% by weight, the impact resistance is improved, but the shaping processability is poor.

The content of the main chain composed of the polyolefin copolymerized with glycidyl methacrylate in the copolymer (D) is not particularly critical, but the content of this main chain in the copolymer (D) is preferably 10 to 90% by weight, more preferably 40 to 80% by weight based on the weight of the copolymer (D).

The content of the copolymer (D) is 2 to 20 parts by weight per 100 parts by weight of the total amount of components (A), (B) and (C). If the amount of the copolymer (D) is smaller than 2 parts by weight, the effect of improving the impact resistance is insufficient, and if the amount of the copolymer (D) is larger than 20 parts by weight, the rigidity at high temperatures is poor and the intended composition of the present invention cannot be obtained.

The process for the preparation of the copolymer (D) is not particularly critical. For example, the process disclosed in Japanese Unexamined Patent Publication No. 63-312313 can be adopted.

A reinforcer and a flame retardant can be incorporated into the thermoplastic resin composition of the present invention.

As the reinforcer incorporated into the resin composition of the present invention, at least one member selected from the group consisting of inorganic fibers such as a glass fiber and a carbon fiber and inorganic fillers such as wollastonite, talc, mica powder, glass foil and potassium titanate is used. The amount of the reinforcer incorporated is 0 to 60 parts by weight, preferably 5 to 50 parts by weight, per 100 parts by weight of the total amount of components (A), (B) and (C). If the amount of the reinforcer is larger than 60 parts by weight, the impact resistance of the composition is poor, and the intended composition of the present invention cannot be obtained.

Halogen compounds and inorganic flame retardants such as antimony compounds, customarily used for making ABS resins and thermoplastic polyesters flame-retardant, can be used as the flame retardant in the present invention. As the halogen compound, there can be mentioned halogenated diphenyl ethers such as decarbromodiphenyl ether and octabromodiphenyl ether, halogenated polycarbonates, and halogen compounds represented by the following formula (3):

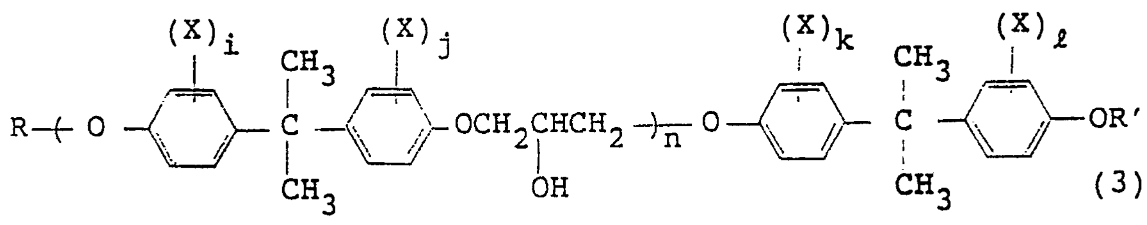

(3)

wherein n represents the average degree of polymerization, which is in the range of from 1.5 to 100, X represents a chlorine atom or a bromine atom, each of i, j, k and ℓ is an integer of from 1 to 4, and R and R′ each represent a hydrogen atom, a methyl group, an epoxypropyl group, a phenyl group, or

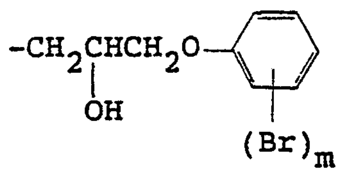

in which m is 0, 1, 2 or 3.

As the inorganic flame retardant, there can be mentioned antimony trioxide, antimony tetraoxide, antimony pentaoxide, sodium pyroantimonate and aluminum hydroxide, although inorganic flame retardants usable are not limited to these compounds. The amount of the halogen compound incorporated is 0 to 35 parts by weight, preferably 3 to 30 parts by weight per 100 parts by weight based on the total weight of components (A), (B) and (C). The amount of the antimony compound incorporated is 0 to 25 parts by weight, preferably 1 to 20 parts by weight, per 100 parts by weight of the total weight of components (A), (B) and (C).

Various additives such as a modifier, a release agent, a light stabilizer, a heat stabilizer, a dye and a pigment can be optionally added to the thermoplastic resin composition of the present invention according to need.

For the preparation of the thermoplastic resin composition of the present invention, devices customarily used for blending resins, such as a Henschel mixer and a tumbling mixer, can be used. For shaping the thermoplastic resin composition of the present invention, customarily used shaping machines such as a single-screw extruder, a twin-screw extruder and an injection molding machine can be used.

The present invention will now be described in detail with reference to the following examples.

In the examples, all of "parts" and "%" are by weight.

In the examples and comparative examples, the physical properties were determined and evaluated according to the following methods.

(1) Izod impact strength

The Izod impact strength was measured according to ASTM D-256 (unit: kg•cm/cm) as to notched test pieces having a thickness of 1/4 inches.

(2) Heat distortion temperature

The heat distortion temperature was measured according to ASTM D-648 (unit: °C) at a flexural stress of 4.6 kg/cm$^2$.

(3) Heat-resistant stability

A sample was allowed to stand in an oven maintained at 150°C for 48 hours, and the color difference ΔE was measured according to ASTM D-1925 by using a color computer (Model SM-4-2 supplied by Suga Shikenki).

Examples 1 through 8 and Comparative Examples 1 through 9

(1) Preparation of Graft Copolymers (A-1) through (A-4)

Preparation of Graft Copolymer (A-1):

To 96.0 parts of octamethyltetracyclosiloxane were added 3.0 parts of ethyl oxosilicate and 1.0 part of γ-methacryloxypropyldimethoxymethylsilane to form 100 parts of a mixed siloxane. Then 100 parts of the mixed siloxane was incorporated in a solution of 1.0 part of dodecyl benzenesulfonate in 300 parts of distilled water, and the mixture was preliminarily stirred at 10,000 rpm by a homomixer and was then

emulsified and dispersed by passing the mixture through a homogenizer under a pressure of 300 kg/cm$^2$ two times to obtain a polyorganosiloxane latex. This latex was transferred into a separable flask equipped with a condenser and a stirring paddle, and the latex was heated at 85°C for 4 hours with stirring and cooled at 5°C for 24 hours. The latex was neutralized with an aqueous solution of sodium hydroxide so that the pH value was 7.2, whereby polymerization was completed. In the obtained polyorganosiloxane, the polymerization conversion was 91.2%, the solid concentration was 22.74% and the swelling degree was 7.4, and the particle diameter of the polyorganosiloxane was 0.150 µm. The swelling degree means the weight ratio (A+B)/A wherein A is the weight of the polyorganosiloxane and B is the weight of toluene absorbed in the polyorganosiloxane, observed when the polyorganosiloxane was saturated with toluene as the solvent at 25°C.

A separable flask was charged with 263.9 parts (the solid concentration was 22.74%) of this polyorganosiloxane latex, the inner atmosphere of the flask was replaced by nitrogen, the temperature was elevated to 70°C, and a monomer mixture comprising 10 parts of acrylonitrile, 30 parts of styrene and 0.08 part of t-butyl hydroperoxide was charged into the separable flask. The mixture was stirred for 30 minutes, and an aqueous solution comprising 0.12 part of Rongalit, 0.0002 part of ferrous sulfate, 0.0006 part of disodium ethylenediamine-tetraacetate and 10 parts of water was added to the mixture to initiate radical polymerization. After generation of polymerization heat ceased, the reaction temperature was further maintained for 2 hours to complete the polymerization. In the obtained graft copolymer, the polymerization conversion was 97%, the grafting ratio was 48% and the grafting efficiency was 72%. The obtained latex was dropped into hot water containing 5 parts of calcium chloride dihydrate dissolved therein to coagulate the polymer, and the polymer was isolated and water was removed by drying to obtain a graft copolymer (A-1).

Preparation of Graft Copolymer (A-2):

To 97.5 parts of octamethylcyclotetrasiloxane were added 2 parts of tetraethoxysilane and 0.5 part of γ-methacryloyloxypropyldimethoxymethylsilane to obtain 100 parts of a siloxane mixture. Then, 100 parts of the siloxane mixture was incorporated in a solution of 1 part of dodecyl benzenesulfonate and 1 part of sodium dodecyl benzenesulfonate in 200 parts of distilled water and the mixture was preliminarily stirred at 10,000 rpm by a homomixer and then emulsified and dispersed under a pressure of 300 kg/cm$^2$ by a homogenizer to obtain an organosiloxane latex. This latex was transferred into a separable flask equipped with a condenser and a stirring paddle, and the liquid mixture was heated at 80°C for 5 hours and allowed to stand at 20°C for 48 hours. Then, the latex was neutralized with an aqueous solution of sodium hydroxide so that the pH value was 6.9, whereby the polymerization was completed and a polyorganosiloxane rubber latex was obtained. In the obtained polyorganosiloxane rubber, the polymerization conversion was 89.7%, and the average particle diameter of the polyorganosiloxane rubber was 0.16 µm.

A separable flask equipped with a stirrer was charged with 100 parts (the solid content was 30%) of this polyorganosiloxane rubber latex and 120 parts of distilled water was added to the rubber latex. Then the inner atmosphere of the flask was replaced by nitrogen, the temperature was elevated to 50°C, and a liquid mixture comprising 37.5 parts of n-butyl acrylate, 2.5 parts of allyl methacrylate and 0.3 part of tert.-butyl hydroperoxide was charged into the flask. The mixture was stirred for 30 minutes to impregnate the polyorganosiloxane rubber particles with the above-mentioned liquid mixture. Then a liquid mixture comprising 0.0003 part of ferrous sulfate, 0.001 part of sodium ethylenediaminetetraacetate, 0.17 part of Rongalit and 3 parts of distilled water was added into the flask to initiate radical polymerization. Then the inner temperature was maintained at 70°C for 2 hours to complete the polymerization, whereby a composite rubber latex was obtained. A part of the latex was collected and the average particle diameter of the composite rubber was measured. It was found that the average particle diameter was 0.19 µm. The latex was dried to obtain a solid, and the solid was extracted with toluene at 90°C for 12 hours. When the gel content was measured, it was found that the gel content was 90.3%. A liquid mixture comprising 0.3 part of tert.-butyl hydroperoxide, 9 parts of acrylonitrile and 21 parts of styrene was added dropwise to this composite rubber latex at 70°C over a period of 45 minutes and the resulting liquid was maintained at 70°C for 4 hours to complete graft polymerization onto the composite rubber.

The polymerization conversion to the obtained graft copolymer was 98.6%. The obtained graft copolymer was coagulated by dropping into hot water containing 5% of calcium chloride, and the coagulated copolymer was isolated, washed and dried at 75°C for 16 hours to obtain a composite rubber type graft copolymer (A-2).

Preparation of Graft Copolymer (A-3):

| Synthesis of Substrate Rubber | |
|---|---|
| 1,3-Butadiene | 66 parts |
| n-Butyl acrylate | 9 parts |
| Styrene | 25 parts |
| Diisopropylbenzene hydroperoxide | 0.2 part |
| Potassium oleate | 1.0 part |
| Disproportionated potassium rhodinate | 1.0 par |
| Sodium pyrophosphate | 0.5 part |
| Ferrous sulfate | 0.005 part |
| Dextrose | 0.3 part |
| Anhydrous sodium sulfate | 0.3 part |
| Deionized water | 200 parts |

The above composition was polymerized at 50°C in an autoclave having an inner volume of 100 ℓ. The polymerization was completed within about 9 hours to obtain a substrate rubber latex having an average particle diameter of 0.08 μm and a pH value of 9.0 at a polymerization conversion of 97%. Then an acid group- containing copolymer for agglomeration was synthesized in the following manner.

| | |
|---|---|
| n-Butyl acrylate | 85 parts |
| Methacrylic acid | 15 parts |
| Potassium oleate | 2 parts |
| Sodium dioctylsulfosuccinate | 1 part |
| Cumene hydroperoxide | 0.4 part |
| Sodium formaldehyde-sulfoxylate | 0.3 part |
| Deionized water | 200 parts |

The above composition was polymerized at 70°C for 4 hours in another polymerization apparatus. The conversion was 98%, and a latex having an average particle diameter of 0.08 μm was obtained. To 100 parts (as solids) of the substrate rubber latex was added 2 parts (as solids) of the above-mentioned acid group-containing copolymer latex with stirring, and stirring was further conducted for 30 minutes to obtain an agglomerated diene type rubber latex having an average particle diameter of 0.27 μm.

A crosslinked acrylic rubber having a multi-layer structure was prepared in the following manner.

At first, 20 parts (as solids) of the above-mentioned agglomerated diene type rubber latex was transferred into a reaction vessel and 1 part of disproportionated potassium rhodinate and 150 parts of deionized water were added to the rubber latex. The inner atmosphere of the reaction vessel was replaced by nitrogen and the inner temperature was elevated to 70°C. A solution of 0.12 part of potassium persulfate (KPS) in 10 parts of deionized water was added into the reaction vessel. A nitrogen-substituted monomer mixture having a composition described below was continuously added dropwise into the reaction vessel over a period of 2 hours.

| | |
|---|---|
| n-Butyl acrylate | 80 parts |
| Allyl methacrylate | 0.32 part |
| Ethylene glycol dimethacrylate | 0.16 part |

Simultaneously with completion of the dropwise addition, elevation of the inner temperature was stopped. The temperature was further elevated to 80°C and reaction was continued for 1 hour, whereby the polymerization conversion was elevated to 98.8% and a multi-layer acrylic rubber containing an agglomerated diene rubber in the interior was obtained. The swelling degree (the ratio of the weight of the rubber

after immersion in methyl ethyl ketone at 30° C for 24 hours and standing for the removal of the liquid, to the absolutely dry weight of the rubber) was 6.4, the gel content was 93.0%, and the average particle diameter was 0.28 µm.

A reaction vessel was charged with 50 parts (as solids) of the multi-layer acrylic rubber latex, the latex was diluted with 140 parts of deionized water, and the temperature was elevated to 70° C. Separately, 50 parts of a monomer mixture for the graft polymerization, which comprised acrylonitrile and styrene at a weight ratio of 29/71, was prepared, 0.35 part of benzoyl peroxide was dissolved in the monomer mixture, and nitrogen substitution was carried out. The thus prepared monomer mixture was added to the above-mentioned reaction mixture at a rate of 15 parts per hour by using a metering pump. After completion of the addition of the monomer mixture, the temperature was elevated to 80° C, and stirring was continued for 30 minutes to obtain a graft copolymer latex. The polymerization conversion was 99%.

Dilute sulfuric acid was added to a part of the latex, the coagulated solid was dried and the obtained powder was directly extracted under reflux of methyl ethyl ketone. When ηsp/C of the extracted part was measured at 25° C by using dimethylformamide as the solvent, it was found that ηsp/C was 0.67.

The above-mentioned graft copolymer latex was incorporated into an aqueous solution (90° C) containing 0.15% of aluminum chloride ($AlCl_3 \cdot 6H_2O$) in an amount three times the amount of the latex with stirring to coagulate the latex.

After completion of the addition of the latex, the temperature in a coagulation vessel was elevated to 93° C, the mixture was allowed to stand in this state for 5 minutes and cooled, the liquid was removed by a centrifugal dehydrator, and the solid was washed and dried to obtain a dry powder of a graft copolymer (A-3).

Preparation of Graft Copolymer (A-4):

To 60 parts (as solids) of a polybutadiene latex having a solid content of 33% and an average particle diameter of 0.08 µm was added 1 part (as solids) of a copolymer latex comprising 85% of n-butyl acrylate units and 15% of methacrylic acid units and having an average particle diameter of 0.08 µm with stirring, and stirring was continued for 30 minutes to obtain an agglomerated rubber latex having an average particle diameter of 0.28 µm.

The obtained agglomerated rubber latex was charged in a reaction vessel, and 50 parts of distilled water, 2 parts of a wood rosin emulsifier, 0.2 part of Demol N (tradename for a naphthalene sulfonic acid/formalin condensate supplied by Kao Corp.), 0.02 part of sodium hydroxide, 0.35 part of dextrose, 5 parts of butyl acrylate and 0.1 part of cumene hydroperoxide were added to the latex with stirring. The temperature was elevated and, when the inner temperature reached 60° C, 0.05 part of ferrous sulfate, 0.2 part of sodium pyrophosphate and 0.03 part of sodium dithionite were added to the mixture. The inner temperature was maintained at 60° C for 1 hour. Then a mixture of 10 parts of acrylonitrile, 25 parts of styrene, 0.2 part of cumene hydroperoxide and 0.5 part of tert-dodecylmercaptan was continuously added dropwise into the reaction vessel over a period of 90 minutes, and the mixture was allowed to stand for 1 hour and cooled. The obtained graft copolymer latex was coagulated by dilute sulfuric acid, washed, filtered and dried to obtain a graft copolymer (A-4).

(2) Polytetramethylene terephthalate having an intrinsic viscosity [η] of 1.05 was used as the polyester (B).

(3) Preparation of polymers (C-1) and (C-2)

Polymers (C-1) and (C-2) having a composition shown in Table 1 were obtained by the suspension polymerization process.

The reduced viscosities ηsp/C of these polymers as determined at 25° C are shown in Table 1. Note, the ηsp/C of polymer (C-1) shown in Table 1 is determined with respect to a 0.2% dimethylformamide solution, and ηsp/C of polymer (C-2) shown in Table 1 is determined with respect to a 1% chloroform solution.

Table 1

| Polymer (C) | Composition | ηsp/C |
|---|---|---|
| Polymer (C-1) | Acrylonitrile 29%, Styrene 71% | 0.62 |
| Polymer (C-2) | Methyl methacrylate 30%, Acrylonitrile 25%, Styrene 45% | 0.07 |

(4) Preparation of Copolymer (D)

To 100 parts of a composition comprising an epoxy group-containing ethylene copolymer, acrylonitrile and styrene, as shown in Table 2, were added 250 parts of pure water, 0.15 part of benzoyl peroxide (Nyper B supplied by Nippon Oil and Fats Co.) and 0.6 part of a compound represented by the following formula (4):

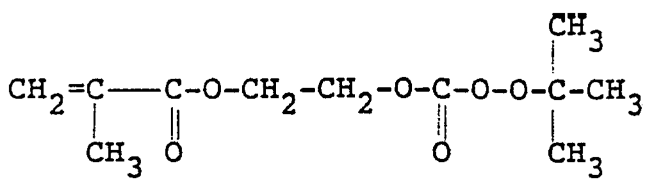

(4)

The mixture was maintained at 80°C for 8 hours in an autoclave to effect polymerization. After water washing and drying, the obtained polymer was extruded from a twin-screw extruder having an L/D ratio of 25 and a screw diameter of 30 mm at a temperature of 220°C to complete grafting reaction.

Table 2

| | Ethylene•GMA:AN-St | | Ethylene:GMA | | AN:St | |
|---|---|---|---|---|---|---|
| | Ethylene•GMA | AN-St | Ethylene | GMA | AN | St |
| D-1 | 70% | 30% | 85% | 15% | 30% | 70% |
| D-2 | 70% | 30% | 90% | 10% | 30% | 70% |
| D-3 | 50% | 50% | 85% | 15% | 30% | 70% |
| Note | | | | | | |
| GMA: glycidyl methacrylate<br>AN: acrylonitrile<br>St: styrene | | | | | | |

(5) ECS03T-34 supplied by Nippon Denki Glass Co. was used as the glass fiber, and Pyrofil TR-06N supplied by Mitsubishi Rayon Co. was used as the carbon fiber.

(6) A compound represented by the following formula (5) or antimony trioxide was used as the flame retardant:

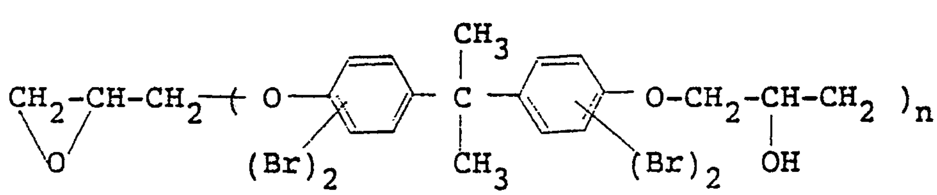

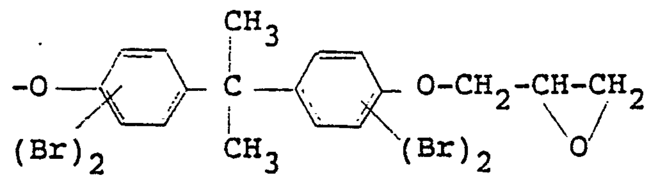

(5)

(Average degree of polymerization: n = 60)

The obtained polymers, the glass fiber, the carbon fiber and the flame retardant were mixed at ratios shown in Table 3 and blended for 5 minute by a Henschel mixer. The blend was pelletized by a twin-screw extruder having a screw diameter of 30 mm. By using the obtained pellet, the physical properties were determined and evaluated according to the above-mentioned methods. The results are shown in Table 3.

From the results shown in Table 3, it is seen that a molded article obtained from the resin composition of the present invention has a much improved impact resistance while retaining a high level heat resistance, and the heat-resistant stability is much higher than the level attained when ABS resin is used as the rubber component (Comparative Example 9).

Table 3

| Composition (parts) | Example No. | | | | | | | | Comparative Example No. | | | | | | | | |
|---|---|---|---|---|---|---|---|---|---|---|---|---|---|---|---|---|---|
| | 1 | 2 | 3 | 4 | 5 | 6 | 7 | 8 | 1 | 2 | 3 | 4 | 5 | 6 | 7 | 8 | 9 |
| Graft copolymer (A-1) | 20 | - | - | - | - | - | - | - | 20 | - | - | - | - | - | - | - | - |
| Graft copolymer (A-2) | - | 20 | - | 25 | - | 30 | - | 25 | - | 20 | - | 25 | - | 30 | - | 25 | - |
| Graft copolymer (A-3) | - | - | 20 | - | 30 | - | 20 | - | - | - | 20 | - | 30 | - | 20 | - | - |
| Graft copolymer (A-4) | - | - | - | - | - | - | - | - | - | - | - | - | - | - | - | - | 20 |
| Polytetramethylene terephthalate (B) | 80 | 80 | 80 | 30 | 60 | 70 | 70 | 20 | 80 | 80 | 80 | 30 | 60 | 70 | 70 | 20 | 80 |
| Polymer (C-1) | - | - | - | 25 | 10 | - | 10 | 55 | - | - | - | 25 | 10 | - | 10 | 55 | - |
| Polymer (C-2) | - | - | - | 20 | - | - | - | - | - | - | - | 20 | - | - | - | - | - |
| Copolymer (D-1) | 5 | 5 | 5 | - | - | - | 5 | - | - | - | - | - | - | - | - | - | 5 |
| Copolymer (D-2) | - | - | - | - | - | 3 | - | 5 | - | - | - | - | - | - | - | - | - |
| Copolymer (D-3) | - | - | - | 5 | - | - | - | - | - | - | - | - | - | - | - | - | - |
| Glass fiber | - | - | - | - | 30 | 15 | - | - | - | - | - | - | 30 | 15 | - | - | - |
| Carbon fiber | - | - | - | - | - | - | 20 | - | - | - | - | - | - | - | 20 | - | - |
| Flame retardant of formula (5) | - | - | - | - | - | 10 | - | - | - | - | - | - | - | 10 | - | - | - |
| Flame retardant, antimony trioxide | - | - | - | - | - | 5 | - | - | - | - | - | - | - | 5 | - | - | - |
| Physical properties | | | | | | | | | | | | | | | | | |
| Izod impact strength (kg·cm/cm) | 20 | 35 | 25 | 17 | 9 | 16 | 12 | 18 | 10 | 17 | 12 | 8 | 4 | 9 | 6 | 7 | 36 |
| Heat distortion temperature (°C) | 106 | 108 | 110 | 100 | 200 | 190 | 180 | 100 | 108 | 110 | 110 | 100 | 200 | 190 | 180 | 100 | 106 |
| Heat-resistant stability ΔE | 2.7 | 2.8 | 3.0 | - | - | - | - | - | - | - | - | - | - | - | - | - | 5.4 |

A conventional thermoplastic resin composition having a polyorganosiloxane rubber or a crosslinked acrylic rubber incorporated therein to improve the weatherability and heat stability is still insufficient in the improvement of the impact resistance. According to the present invention, by incorporating, in this thermoplastic resin composition, a specific copolymer, that is, a copolymer comprising a polyolefin copolymerized with glycidyl methacrylate as the main chain and a copolymer composed of a vinyl or

vinylidene cyanide monomer and an aromatic vinyl or vinylidene monomer as the side chain, in which the content glycidyl methacrylate in the polyolefin copolymerized with glycidyl methacrylate is 5 to 30% by weight, the impact resistance is highly improved. Accordingly, the thermoplastic resin composition of the present invention can be widely used in various fields.

## Claims

1. A thermoplastic resin composition which comprises:
(A) 10 to 90 parts by weight of a graft copolymer obtained by graft-polymerizing, in the presence of (a) 15 to 85 parts by weight of at least one rubbery polymer selected from the group consisting of organosiloxane rubbers and crosslinked acrylic rubbers, (b) 85 to 15 parts by weight of a monomer mixture comprising (i) 15 to 40% by weight of a vinyl or vinylidene cyanide monomer, (ii) 25 to 85% by weight of an aromatic vinyl or vinylidene monomer and (iii) 0 to 35% by weight of other ethylenically unsaturated monomer, in which the sum of the amounts of components (a) and (b) is 100 parts by weight and the sum of the amounts of components (i) through (iii) is 100% by weight;
(B) 10 to 90 parts by weight of a polyester resin composed mainly of a polyester derived from an aromatic dicarboxylic acid having 8 to 22 carbon atoms and a glycol having 2 to 22 carbon atoms which is selected from the group consisting of alkylene glycols, cycloalkylene glycols and aralkylene glycols;
(C) 0 to 70 parts weight of a polymer obtained by polymerizing at least one monomer selected from the group consisting of vinyl or vinylidene cyanide monomers, aromatic vinyl or vinylidene monomers and methacrylic acid ester monomers; the sum of the amounts of components (A), (B) and (C) being 100 parts by weight; and
(D) 2 to 20 parts by weight, per 100 parts by weight of the sum of components (A), (B) and (C), of a copolymer comprising a polyolefin copolymerized with glycidyl methacrylate as the main chain and a copolymer comprised of vinyl or vinylidene cyanide monomer units and aromatic vinyl or vinylidene monomer units as the side chain, in which the content of glycidyl methacrylate in the glycidyl methacrylate-copolymerized polyolefin is 5 to 30% by weight based on the weight of the glycidyl methacrylate-copolymerized polyolefin.

2. A thermoplastic resin composition according to claim 1, wherein the organosiloxane rubbers are a polyorganosiloxane rubber containing at least 50% by weight of siloxane units represented by the following formula (1):

$R^1{}_mSiO_{(4-m)/2}$ (1)

wherein $R^1$ represents a hydrogen atom, a methyl group, an ethyl group, a propyl group or a phenyl group, and m is 0, 1 or 2,
and derived from a cyclic siloxane compound having a ring comprising at least three members; or the organosiloxane rubbers are a composite rubber comprising 10 to 90% by weight of the above-mentioned polyorganosiloxane rubber and 90 to 10% by weight of a crosslinked acrylic acid ester rubber, said polyorganosiloxane rubber and said crosslinked acrylic acid ester rubber being entangled with each other or forming together a multi-layer structure.

3. A thermoplastic resin composition according to claim 2, wherein the polyorganosiloxane rubber is synthesized from the cyclic siloxane compound, 0.1 to 30% by weight, based on the polyorganosiloxane rubber, of a crosslinking agent selected from the group consisting of trifunctional silane compounds and tetra-functional silane compounds, and 0 to 10% by weight, based on the polyorganosiloxane rubber, of a grafting agent which is capable of forming units represented by the following formula:

$$CH_2{=}\underset{R^3}{\overset{|}{C}}{-}COO{-}(CH_2)_p{-}SiR^2{}_nO_{(3-n)/2} \quad (2\text{-}1),$$

$$CH_2{=}CH{-}SiR^2{}_nO_{(3-n)/2} \quad (2\text{-}2),$$

or

$$HS{-}(CH_2)_p{-}SiR^2{}_nO_{(3-n)/2} \quad (2\text{-}3)$$

wherein $R^2$ represents a methyl group, an ethyl group or a phenyl group, $R^3$ represents a hydrogen atom or a methyl group, n is 0, 1 or 2, and p is a number of from 1 to 6.

4. A thermoplastic resin according to claim 2, wherein the composite rubber has an average particle

diameter of 0.08 to 0.6 $\mu$m.

5. A thermoplastic resin composition according to claim 2, wherein the crosslinked acrylic acid ester rubber is derived from (1) an acrylic acid ester or a monomer mixture comprising at least 50% by weight of an acrylic acid ester and not more than 50% by weight of a copolymerizable monoethylenically unsaturated monomer, (2) a crosslinking agent and (3) a grafting agent; the total amount of the crosslinking agent (2) and the grafting agent (3) being 0.1 to 10% by weight based on the crosslinked acrylic acid ester rubber; said acrylic acid ester being selected from the group consisting of alkyl acrylates having 1 to 12 carbon atoms in the alkyl group, haloalkyl acrylates having 1 to 12 carbon atoms in the haloalkyl group, and aralkyl acrylates having 7 to 10 carbon atoms in the aralkyl group; said grafting agent being selected from the group consisting of compounds having 2 or 3 addition-polymerizable unsaturated groups which are different from one another in the polymerization reactivity and which are alkyl esters of unsaturated acids; and said crosslinking agent being selected from the group consisting of a plurality of addition-polymerizable unsaturated groups which are substantially equal or only slightly different from one another in the polymerization reactivity.

6. A thermoplastic resin composition according to claim 1, wherein the crosslinked acrylic rubbers are (a) a crosslinked acrylic acid ester rubber formed from an acrylic acid ester or a monomer mixture comprised of at least 50% by weight of an acrylic acid ester and not more than 50% by weight of a copolymerizable monoethylenically unsaturated monomer, in combination with a grafting agent and a crosslinking agent, or (b) an acrylic rubber having a multi-layer structure, which comprises a core portion of a diene rubber in the interior of particles, and an outer layer portion composed of a crosslinked acrylic acid ester rubber formed from an acrylic acid ester or a monomer mixture comprised of at least 50% by weight of an acrylic acid ester and not more than 50% by weight of a copolymerizable monoethylenically unsaturated monomer, in combination with a grafting agent and a crosslinking agent.

7. A thermoplastic resin composition according to claim 6, wherein said acrylic acid ester is selected from the group consisting of alkyl acrylates having 1 to 12 carbon atoms in the alkyl group, haloalkyl acrylates having 1 to 12 carbon atoms in the haloalkyl group, and aralkyl acrylates having 7 to 10 carbon atoms in the aralkyl group; said grafting agent is selected from the group consisting of compounds having 2 or 3 addition-polymerizable unsaturated groups which are different from one another in the polymerization reactivity and which are alkyl esters of unsaturated acids; said crosslinking agent is selected from the group consisting of a plurality of addition-polymerizable unsaturated groups which are substantially equal or only slightly different from one another in the polymerization reactivity; and the total amount of the crosslinking agent and the grafting agent is 0.1 to 10% by weight based on the crosslinked acrylic acid ester rubber.

8. A thermoplastic resin composition according to claim 6, wherein said multi-layer acrylic rubber (b) is comprised of 2 to 50% by weight of the diene rubber and 98 to 50% by weight of the crosslinked acrylic acid ester rubber.

9. A thermoplastic resin composition according to claim 1, wherein the vinyl or vinylidene cyanide monomers used for the preparation of the graft copolymer (A), the polymer (C) and the copolymer (D) are selected from the group consisting of acrylonitrile, methacrylonitrile, ethacrylonitrile and fumaronitrile.

10. A thermoplastic resin composition according to claim 1, wherein the aromatic vinyl or vinylidene monomers used for the preparation of the graft copolymer (A), the polymer (C) and the copolymer (D) are selected from the group consisting of styrene, $\alpha$-methylstyrene, o-methylstyrene, 1,3-dimethylstyrene, p-methylstyrene, t-butylstyrene, a halogenated styrene and p-ethylstyrene.

11. A thermoplastic resin composition according to claim 1, wherein the ethylenically unsaturated monomer is selected from the group consisting of methyl methacrylate, ethyl methacrylate and maleimide monomers.

12. A thermoplastic resin composition according to claim 1, wherein the graft copolymer has an average particle diameter of 0.2 to 0.5 $\mu$m.

13. A thermoplastic resin composition according to claim 1, wherein the polymer (C) has an intrinsic viscosity of 0.3 to 1.5.

14. A thermoplastic resin composition according to claim 1, wherein the polyolefin copolymerized with glycidyl methacrylate comprises 70 to 95% by weight of olefin units derived from an $\alpha$-olefin having 2 to 4 carbon atoms.

15. A thermoplastic resin composition according to claim 1, wherein the ratio by weight of the vinyl or vinylidene cyanide monomer to the aromatic vinyl or vinylidene monomer in the polymer as the side chain polymer of the copolymer (D) is in the range of from 10/90 to 40/60.

16. A thermoplastic resin composition according to claim 1, wherein the copolymer (D) comprises 10 to 90% by weight of the glycidyl methacrylate-copolymerized polyolefin and 90 to 10% by weight of the copolymer comprised of vinyl or vinylidene cyanide monomer units and aromatic vinyl or vinylidene monomer units.

17. A thermoplastic resin composition according to claim 1, which further comprises up to 60 parts by weight, per 100 parts by weight of the sum of components (A), (B) and (C), of a reinforcer which is selected from the group consisting of inorganic fibers and inorganic fillers.

18. A thermoplastic resin composition according to claim 1, which further comprises up to 25 parts by weight, per 100 parts by weight of the sum of components (A), (B) and (C), of an antimony-containing inorganic flame retardant or up to 35 parts by weight, per 100 parts by weight of the sum of components (A), (B) and (C) of a halogen-containing flame retardant.